# EUROPEAN PATENT APPLICATION

(11) **EP 4 836 474 A1**
(43) Date of publication of application: **04.11.2026**
(21) Application number: 23962885.2
(22) Date of filing: 29.12.2023
(51) Int. Cl.: H04W 12/06

(54) **COMMUNICATION METHOD AND DEVICE**

(71) Applicant: GUANGDONG OPPO MOBILE TELECOMMUNICATIONS CORP., LTD., Dongguan, Guangdong 523860 (CN)
(72) Inventor: GAN, Lu, Dongguan, Guangdong 523860 (CN); LIU, Xuefeng, Dongguan, Guangdong 523860 (CN); LIU, Wenya, Dongguan, Guangdong 523860 (CN); GONG, Dan, Dongguan, Guangdong 523860 (CN)
(74) Representative: Penza, Giancarlo
(86) International application number: PCT/CN2023/143550
(87) International publication number: WO 2025/138211

(57) **Abstract**

The present application relates to a communication method and device. The method comprises: sending an authentication request to a first network device in a first network, wherein the authentication request carries a first credential used for verifying the permission of a terminal, which belongs to a second network, to use a resource of the first network

## Description

### TECHNICAL FIELD

The present application relates to the technical field of communications, and in particular to a communication method and device.

### BACKGROUND

In related art, a roaming protocol refers to a protocol in a mobile communication network that allows terminals to switch between and use services across networks of different operators, such a protocol enables users to communicate through networks of other operators when they leave the network coverage of their own operator. The formulation and implementation of roaming protocols help improve user experience and allow terminals to freely switch between networks maintained by different operators in different areas. However, during the roaming process, how to ensure the efficiency of terminal's access to a roaming network, i.e., a network other than its belonged operator, becomes a problem that needs to be solved.

### SUMMARY

Embodiments of the present application provide a communication method and device.

An embodiment of the present application provides a communication method performed by a terminal, the method including the following operation.

An authentication request is sent to a network device in a first network, where the authentication request carries a first credential for verifying an authority of the terminal belonging to a second network to use a resource of the first network.

An embodiment of the present application provides a communication method performed by a first network device, the method including the following operation.

An authentication request received from a terminal, where the authentication request carries a first credential for verifying an authority of the terminal belonging to a second network to use a resource of a first network, and the first network device belongs to the first network.

An embodiment of the present application provides a communication method performed by a second core network device, the method including the following operation.

A first resource authorization message is sent to a terminal, where the first resource authorization message carries a first credential for verifying an authority of the terminal belonging to a second network to use a resource of a first network, and the second core network device belongs to the second network.

An embodiment of the present application provides a communication method performed by a first core network device, the method including the following operation.

A second resource authorization message is uploaded to a block chain, where the second resource authorization message carries a second credential, and the second credential carries a second signature for verifying an authority of a second network to use a resource of a first network, and the first core network device belongs to the first network.

An embodiment of the present application provides a terminal, including a first communication unit.

The first communication unit is configured to send an authentication request to a network device in a first network, where the authentication request carries a first credential for verifying an authority of the terminal belonging to a second network to use a resource of the first network.

An embodiment of the present application provides a first network device, including a second communication unit.

The second communication unit is configured to receive an authentication request from a terminal, where the authentication request carries a first credential for verifying an authority of the terminal belonging to a second network to use a resource of a first network, and the first network device belongs to the first network.

An embodiment of the present application provides a second core network device, including a third communication unit.

The third communication unit is configured to send a first resource authorization message to a terminal, where the first resource authorization message carries a first credential for verifying an authority of the terminal belonging to a second network to use a resource of a first network, and the second core network device belongs to the second network.

An embodiment of the present application provides a first core network device, including a fourth communication unit.

The fourth communication unit is configured to upload a second resource authorization message to a block chain, where the second resource authorization message carries a second credential, and the second credential carries a second signature for verifying an authority of a second network to use a resource of a first network, and the first core network device belongs to the first network.

By adopting the above solution, when a terminal accesses a first network to which it does not belong, it can send, to a network device in the first network, an authentication request that carries a first credential for verifying an authority of the terminal belonging to the second network to use a resource of the first network. In this way, when the terminal needs to access another network, authentication of the terminal can be realized by simply using the first credential, which not only ensures security but also improves authentication efficiency, thereby avoiding issues such as low efficiency caused by the fact that a core network device is required to perform security calculations for authentication in related technologies.

### BRIEF DESCRIPTION OF THE DRAWINGS

FIG. 1 is a schematic diagram of an application scenario according to embodiments of the present application.
FIG. 2 is a schematic flowchart of a communication method according to an embodiment of the present application.
FIG. 3 is a schematic flowchart of a communication method according to another embodiment of the present application.
FIG. 4 is a schematic flowchart of a communication method according to yet another embodiment of the present application.
FIG. 5 is a schematic flowchart of a communication method according to still another embodiment of the present application.
FIG. 6 is a schematic flowchart of issuing a first-level credential according to an embodiment of the present application.
FIG. 7 is a schematic flowchart of issuing a second-level credential according to an embodiment of the present application.
FIG. 8 is a schematic flowchart of a terminal accessing a network by using a second-level credential according to an embodiment of the present application.
FIG. 9 is a schematic flowchart of a processing procedure of access rejection according to an embodiment of the present application.
FIG. 10 is a schematic block diagram of a terminal according to an embodiment of the present application.
FIG. 11 is a schematic block diagram of a first network device according to an embodiment of the present application.
FIG. 12 is a schematic block diagram of a second core network device according to an embodiment of the present application.
FIG. 13 is a schematic block diagram of a first core network device according to an embodiment of the present application.

### DETAILED DESCRIPTION

The technical solution of embodiments of the present application may be applied to various communication systems, such as Long Term Evolution (LTE) system, Long Term Evolution-Advanced (LTE-A) system, New Radio (NR) system, evolution of NR system, Wireless Local Area Network (WLAN) system, WiFi system, or other communication systems.

Embodiments of the present application describe various embodiments in conjunction with network devices and terminals. The terminals may be mobile or fixed, and the terminals may also be referred to as mobile stations, user units, or the like. The terminal may be a station in WLAN, or it may be a terminal such as a smart terminal, a wireless modem, a laptop computer, a tablet computer, or the like. In the embodiments of the present application, the terminal may be a Virtual Reality (VR) terminal/Augmented Reality (AR) terminal, an industrial control terminal, an unmanned driving terminal, a remote medical terminal, a smart grid terminal, a transportation safety terminal, a smart city terminal, a wireless terminal of a smart home, or the like. As an example and not limitation, in the embodiments of the present application, the terminal devices may also be wearable devices.

In the embodiments of the present application, the network device may be a device for communicating with terminals. The network device may be an access point in a WLAN, an evolved base station in LTE, or a relay station, or a vehicle-mounted device, a wearable device, and a network device (gNB) in an NR network, or a network device in a future evolved Public Land Mobile Network (PLMN) network, or a network device in a non-terrestrial network. As an example and not limitation, in the embodiments of the present application, the network device may have mobility characteristics, for example, the network device may be a mobile device.

To facilitate understanding of the technical solutions in the embodiments of the present application, the related technologies involved in the embodiments of the present application are described below. As optional solutions, the following related technologies may be combined with the technical solutions of the embodiments of the present application arbitrarily, all of which fall within the protection scope of the embodiments of the present application.

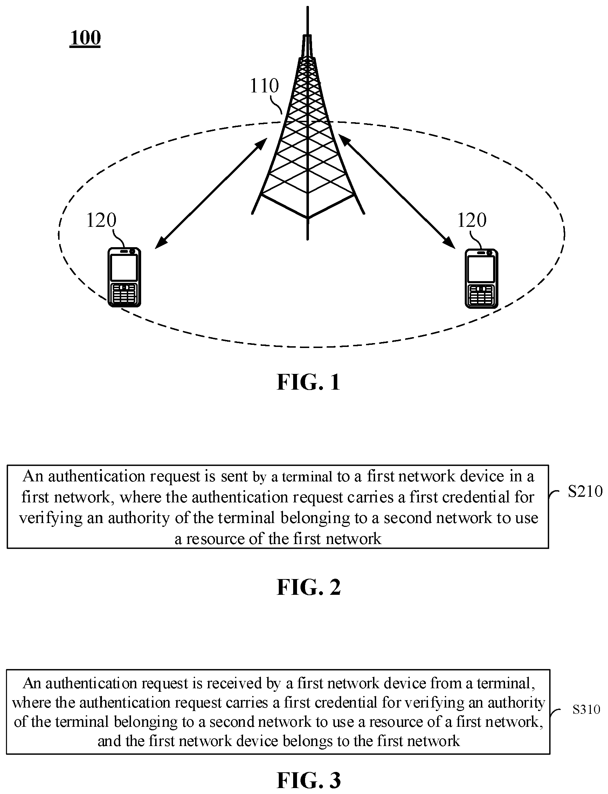

FIG. 1 exemplarily illustrates a communication system 100. The communication system includes a network device 110 and two terminals 120. In a possible implementation, the communication system 100 may include multiple network devices 110, and another number of terminal devices may be included within the coverage of each network device 110, which is not limited in the embodiments of the present application. In a possible implementation, the communication system 100 may further include other network entities, such as a mobility management entity, an access and mobility management function, etc., which are not limited in the embodiments of the present application. The network device may further include an access network device and a core network device. That is, the communication system may further include a plurality of core networks for communicating with access network devices. The access network devices may be base stations in an LTE, LTE-A, or NR system. Taking the communication system illustrated in FIG. 1 as an example, the communication device may include a network device and terminals having a communication function. The communication device may also include other devices in the communication system, for example other network entities such as a network controller and a mobility management entity, which are not limited in the embodiments of the present application.

FIG. 2 is a schematic flowchart of a communication method performed by a terminal according to an embodiment of the present application. The method includes at least part of the following contents.

In S210, an authentication request is sent by the terminal to a network device in a first network, where the authentication request carries a first credential for verifying an authority of the terminal belonging to a second network to use a resource of the first network.

FIG. 3 is a schematic flowchart of a communication method performed by a first network device according to an embodiment of the present application. The method includes at least part of the following contents.

In S310, an authentication request received by the first network device from a terminal, where the authentication request carries a first credential for verifying an authority of the terminal belonging to a second network to use a resource of a first network, and the first network device belongs to the first network.

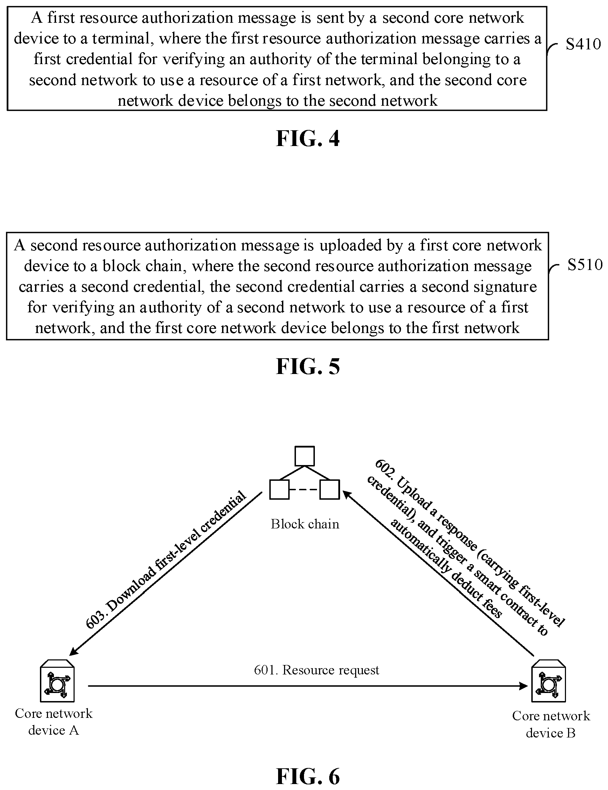

FIG. 4 is a schematic flowchart of a communication method performed by a second core network device according to an embodiment of the present application. The method includes at least part of the following contents.

In S410, a first resource authorization message is sent by the second core network device to a terminal, where the first resource authorization message carries a first credential for verifying an authority of the terminal belonging to a second network to use a resource of a first network, and the second core network device belongs to the second network.

FIG. 5 is a schematic flowchart of a communication method performed by a first core network device according to an embodiment of the present application. The method includes at least part of the following contents.

In S510, a second resource authorization message is uploaded by the first core network device to a block chain, where the second resource authorization message carries a second credential, and the second credential carries a second signature for verifying an authority of a second network to use a resource of a first network, and the first core network device belongs to the first network.

The first core network device and the second core network device belong to different networks, the first core network device may be a core network device in a first network, and the second core network device may be a core network device in a second network. The first network and the second network are different. The first network and the second network belong to different operators respectively, or the first network and the second network are managed by different operators.

The functions of the first core network device may include: being responsible for managing resources (or spectrum resources) of the first network to meet the communication requirements of devices subscribed to the first network in mobile communications. The functions of the second core network device may include: being responsible for managing resources (or spectrum resources) of the second network to meet the communication requirements of devices subscribed to the second network in mobile communications. The device types of the first core network device and the second core network device are not limited in this embodiment, for example, the first core network device and the second core network device may be control plane network elements in their respective belonged networks, and the like. Possible device types of the first core network device and the second core network device are not limited or exhaustive herein.

The terminal belongs to a network where the second core network device is located, meaning that the terminal is a subscribed terminal for the second network, or in other words, the second network is a network to which the terminal belongs.

The first network device may include one of the following: an access network device, or a third network core network device. That is, the first network device may be an access network device belonging to the first network or a third core network device belonging to the first network.

The function of the access network device is to provide mobile communication services and to connect terminals with the first core network device. That is, when a terminal(s) subscribed to the second network wants to access or use the resources of the first network in which the first core network device is located, the terminal may initiate an authentication process through the access network device. In this case, the first network refers to a roaming network for the terminal, and the access network device is an access network device in the roaming network for the terminal.

Although both the third core network device and the first core network device belong to the first network, the third core network device is different from the aforementioned first core network device, and the third core network device may be a core network device that performs authentication. Respective possible entity names of the third core network device and the first core network device are not limited in the embodiment.

In some possible implementations, a process of generating and issuing a second credential needs to be performed first between the first core network device and the second core network device, where the second credential is used to generate the first credential.

On the second core network device side, the method may further include that: a second resource request message is sent by the second core network device to the first core network device, where the second resource request message is used to request use of the resource of the first network; and the second credential is downloaded by the second core network device from the block chain.

On the first core network device side, the method may further include that: a second resource request message is received by the first core network device from a second core network device in the second network, where the second resource request message is used to request use of the resource of the first network. The method may further include that the second resource authorization message is uploaded to the block chain.

Since the second credential involves interaction and processing at the core network level of two networks and needs to be allocated or issued before the terminal accesses the first network using the first credential, in some possible examples, the second credential may also be referred to as a first-level credential.

In one embodiment, the second resource request message may carry at least one of the following: a sixth signature, information requesting the use of the resource of the first network, or an identifier of the second core network device.

Here, the identifier of the second core network device may be used for the first core network device to determine identity of a device sending the second resource request message.

The sixth signature may be calculated based on a private key of the second core network device and at least one of the following: an identifier of the second core network device, or information requesting the use of the resource of the first network. The signature algorithm used for calculating the sixth signature may be configured according to the actual situation.

For example, the calculation of the sixth signature may be: using a signature algorithm to calculate at least one of the identifier of the second core network device or the information requesting the use of the resource of the first network based on the private key of the second core network device, to obtain the sixth signature.

For example, the calculation of the sixth signature may include: performing a hash calculation based on at least one of the identifier of the second core network device or the information requesting the use of the resource of the first network to obtain a sixth hash value; and encrypting the sixth hash value based on the private key of the second core network device to obtain the sixth signature.

It should be understood that parameters used for calculating the sixth signature may be the same or partially the same as other parameters carried in the second resource request message besides the sixth signature. For example, in addition to the sixth signature, the second resource request message further carries the identifier of the second core network device and the information requesting the use of the resource of the first network. The sixth signature may be calculated by using at least one of the identifier of the second core network device or the information requesting the use of the resource of the first network.

The information requesting the use of the resource of the first network refers to relevant information for a resource of the first network that the second core network device applies to use. The resource may refer to a time domain resource and/or a frequency domain resource.

Specifically, the information requesting the use of the resource of the first network may include at least one of: an identifier of a first core network device, an identifier (or number) of the resource of the first network requested for use, a usage duration for the use of the resource of the first network requested, or a price for the use of the resource of the first network requested.

The quantity of resources of the first network that the second core network device applies to use may be one or more. That is, a second resource that the second core network device requests to use may be one or more resources among all resources supported or managed by the first network (first network). The second core network device may indicate, through identifier of each resource, which resource or resources in the first network is or are requested for use this time. That is, the identifier of the resource of the first network requested for use may refer to an identifier of at least one resource that the second core network applies to use among all resources of the first network.

The usage duration for the use of the resource of the first network requested may include at least one of: a usage start time at which the use of the resource of the first network is requested, a usage end time at which the use of the resource of the first network is requested, or a valid duration during which the use of the resource of the first network is requested.

For example, the usage duration for the use of the resource of the first network requested may include only the usage end time at which the use of the resource of the first network is requested. Correspondingly, the first core network device may set the time when the second resource request message is received as the usage start time at which the use of the resource of the first network is requested.

For example, the usage duration for the use of the resource of the first network requested may include only the valid duration during which the use of the resource of the first network is requested. Correspondingly, the first core network device may set the time at which the second resource request message is received as the start time for counting of the valid duration for the resource of the first network requested for use.

For example, the usage duration for the use of the resource of the first network requested may include: a usage start time at which the use of the resource of the first network is requested, and a usage end time at which the use of the resource of the first network is requested.

For example, the usage duration for the use of the resource of the first network requested may include: a usage start time at which the use of the resource of the first network is requested, or a valid duration during which the use of the resource of the first network is requested.

It should be understood that the above are merely for illustrative description, and in actual processing, the usage duration for the use of the resource of the first network requested may be indicated in other manner, which are not limited or exhaustive in the present embodiment.

The price for the use of the resource of the first network requested may refer to: a total price for the use of the resource of the first network within the usage duration for the use of the resource of the first resource requested. The price may be calculated according to a unit price and a usage duration for each of resources in the first network. The specific calculation manner of the price, relevant definition of the unit price, and the like are not limited in this embodiment.

In one embodiment, after receiving the second resource request message from the second core network device, the first core network device may first verify a reliability of the second resource request message, and generate a second credential when the verification is passed.

Here, verifying the reliability of the second resource request message may include at least one of the following: verifying the second core network device based on the sixth signature, or checking the information requesting the use of the resource of the first network. Correspondingly, the verification being passed may mean that: if only the verifying the second core network device based on the sixth signature is performed, it is determined that the verification is passed when the verification of the second core network device is successful; or if only the checking the information requesting the use of the resource of the first network is performed, it is determined that the verification is passed when it is checked that the information requesting the use of the resource of the first network is correct; or if the second core network device is verified based on the sixth signature and the information requesting the use of the resource of the first network is checked, it is determined that the verification is passed when the verification of the second core network device is successful and it is checked that the information requesting the use of the resource of the first network is correct.

Optionally, the verifying the second core network device based on the sixth signature may include that: the second core network device is verified based on a public key of the second core network device, the sixth signature, and at least one of the following information carried in the second resource request message: the identifier of the second core network device, or the information requesting the use of the resource of the first network.

Herein, the public key of the second core network device may be publicly available on the block chain, and the first core network device may obtain the public key of the second core network device from the block chain. Exemplarily, the first core network device may obtain the public key of the second core network device from the block chain according to the identifier of the second core network device.

The signature verification algorithm used for verifying the sixth signature shall correspond to the algorithm used for calculating the sixth signature, and parameters used for verifying the sixth signature shall be the same as those used for calculating the sixth signature.

For example, it is assumed that the sixth signature is calculated based on the identifier of the second core network device and the information requesting the use of the resource of the first network. The verifying the second core network device based on the sixth signature may be: using a signature verification algorithm to decrypt the sixth signature based on the public key of the second core network device, to obtain a to-be-verified parameter; and verifying the second core network device based on the to-be-verified parameter, the identifier of the second core network device, and the information requesting the use of the resource of the first network.

Herein, the verifying the second core network device based on the to-be-verified parameter, the identifier of the second core network device and the information requesting the use of the resource of the first network may include at least one of the following that: when the to-be-verified parameter is the same as the identifier of the second core network device and the information requesting the use of the resource of the first network, it is determined that the verification of the second core network device is successful; or when the to-be-verified parameter is different from the identifier of the second core network device and the information requesting the use of the resource of the first network, it is determined that the verification of the second core network device fails.

For example, it is assumed that the sixth signature is calculated based on the identifier of the second core network device and the information requesting the use of the resource of the first network. The verifying the second core network device based on the sixth signature may may include: performing a hash calculation based on the identifier of the second core network device and the information requesting the use of the resource of the first network, to obtain a sixth verification hash value; decrypting the sixth signature based on the public key of the second core network device to obtain a sixth decryption value; and performing verification on the second core network device based on the sixth decryption value and the sixth verification hash value. Herein, the verifying the second core network device based on the sixth decryption value and the sixth verification hash value may include at least one of: the verification of the second core network device is successful when the sixth decryption value and the sixth verification hash value are the same; or the verification of the second core network device fails when the sixth decryption value and the sixth verification hash value are different.

It should be noted that if the verification of the second core network device based on the sixth signature fails, the first core network device may terminate the process and/or return a response message of false verification to the second core network device.

Optionally, the checking the information requesting the use of the resource of the first network may include: checking whether an identifier of each resource in the information requesting the use of the resource of the first network is an identifier of a resource in a network where it is located, and/or checking whether the price for the resource of the first network requested to use is accurate, or the like. The specific possible checking contents and checking manners are not limited or exhaustive here.

In one embodiment, the second credential carries a second signature for verifying an authority of the second core network device to use the resource of the first core network device.

On the first core network device side, the second signature may be obtained by calculating parameters contained in the second credential based on a private key of the first core network device.

Specifically, the second credential further carries at least one of the following: an identifier of the second core network device, a public key of the second core network device, an identifier of the first core network device, a public key of the first core network device, or information about a resource of the first network authorized for use by the second network.

Parameters or contents included in the information about the resource of the first network authorized for use by the second network are similar to the contents included in the information requesting the use of the resource of the first network, and will not be elaborated again.

The second signature is calculated based on a private key of the first core network device and at least one of the following: an identifier of the first core network device, a public key of the first core network device, an identifier of a second core network device in the second network, a public key of the second core network device, or information about the resource of the first network authorized for use by the second network.

Exemplarily, the calculation of the second signature may be performed by: using a signature algorithm and based on a private key of the first core network device, to calculate at least one of the following: an identifier of the second core network device, a public key of the second core network device, an identifier of the first core network device, a public key of the first core network device, or information about the resource of the first network authorized for use by the second network.

Exemplarily, the calculation of the second signature may include: performing a hash calculation based on at least one of the following: the identifier of the second core network device, the public key of the second core network device, the identifier of the first core network device, the public key of the first core network device, or the information about the resource of the first network authorized for use by the second core network device, to obtain a second hash value; and encrypting the second hash value based on a private key of the first core network device to obtain the second signature.

The second signature in the second credential is used to bind the authorized resource with the identity and public key of the second core network device, that is, authorization of the second core network device is implemented for a specific spectrum resource.

On the block chain side, after acquiring the second resource authorization message uploaded by the first core network device, the method may further include that: other on-chain nodes on the block chain performs verification of the second resource authorization message, and trigger a smart contract if the verification passes. The function of the smart contract may be to deduct expenses associated with the second core network device.

Exemplarily, the operation of the other on-chain nodes on the block chain performing verification of the second resource authorization message may include at least one of the following: performing verification of the second resource authorization message based on the second signature from the second credential and at least one of the following information in the second credential: the identifier of the second core network device, the public key of the second core network device, the identifier of the first core network device, the public key of the first core network device, or the information about the resource of the first network authorized for use by the second network; and determining that the resource authorized by the second credential is provided to the second core network by the first core network device if the verification passes.

After completing the above processes, the block chain (such as the on-chain nodes of the block chain) sends a deduction notification to the second core network device. Accordingly, the second core network device may perform a process of downloading the second credential from the block chain after receiving the deduction notification. In addition, after receiving the deduction notification, the second core network device may deduct corresponding fees to be paid to the first core network device.

The following gives description for the processing of issuing the second credential in combination with the first embodiment. In the first embodiment, as an example, the second credential is a first-level credential, the first core network device is denoted as a core network device B (or core network B), and the second core network device is denoted as a core network device A (or core network A). The flow of the first embodiment is summarized as follows. When the core network A applies for spectrum resources from the core network B, the core network B binds specific spectrum resources with identity *ID_{A}* and public key*PK_{A}* of the core network A (which is signed by the core network B using a private key) to generate a first-level credential to realize authorization of the spectrum resources. The core network B uploads the first-level credential to the block chain for verification by other nodes (i.e., verifying the signature in the credential to confirm that the credential is issued by the core network B, the relevant identity in the credential is the core network A, and the transaction content is the specific spectrum resources owned by the core network B). Upon successful verification, the smart contract is triggered by the core network B to automatically deduct the fee from the core network A. Specific descriptions will be given with reference to FIG. 6, including operations 601, 602, 603.

In operation 601, core network device A sends a resource request (i.e., the second resource request message) to core network device B off-chain to request specific spectrum resources. The resource request includes at least one of the following: , indicating an identity of the requester (i.e., the core network device A); relevant data of the spectrum resources requested by the core network device A (i.e., information requesting the use of the resource of the first network), which can be simply denoted as - tt (Resource Attribute); or a sixth signature ig [*H*( *_{A}*, - tt for the above messages.

Exemplarily, the operation 601 may be represented as: core network device → core network device B: , - tt, i g[*H*( *_{A}*, - tt )].

The sixth signature is to ensure the integrity of messages while enabling the core network device B to ensure that the messages originate from the core network device A.

The specific contents or formats for the relevant data of the spectrum resources applied by the core network device A are shown in Table 1 below:

**Table 1**

| Contents or formats for relevant data of spectrum resources applied by core network device A: | | | |
|---|---|---|---|
| *_{B}* | Resource number (Nom) | Usage duration | Price |

Specifically, *_{B}* is the identity (ID) of core network device B, representing the owner of the spectrum resources.The resource number is the number of resources applied by the core network device A, which may be simply shown as Nom. The related description of *_{B}*, the resource number, the usage duration, and the price is the same as that of the previous embodiment, and will not be elaborated herein.

In operation 602, after verifying the reliability of the message sent by the core network device A (through signature verification and checking the spectrum resource related data), the core network device B responds to the request from the core network device A and generates a first-level credential, and the core network device B uploads a resource response (i.e., the second resource authorization message) carrying the first-level credential to the block chain.

Exemplarily, the operation 602 may be represented as: core network device B → block chain (smart contract): er t_{B-} (first-level credential).

The purpose of this response is to authorize the requested spectrum resources through the first-level credential and to charge them through the smart contract.

The content contained in the first-level credential is shown in Table 2:

**Table 2**

| First-level credential er t_{B-} includes | | | | | |
|---|---|---|---|---|---|
| *ID_{B}* | *PK_{B}* | - tt | *ID_{A}* | *PK_{A}* | *Sig_{B}*[*H*(*M*₁)] |

Specifically, the first-level credential includes identity *ID_{A}* of the core network device A, a public key *PK_{A}* of the core network device A, spectrum resource related data - tt , identity *ID_{B}* of the core network device B, a public key *PK_{B}* of the core network device B, and a signature i g*_{B}* (i.e., the second signature) of the core network device B for the above messages. Herein, the identity *ID_{A}* of the core network device A, the public key *PK_{A}* of the core network device A, the spectrum resource related data - tt , the identity *ID_{B}* of the core network device B, and the public key *PK_{B}* of the core network device B are expressed as M1, and the calculation of the second signature may be expressed as *Sig_{B}*[*H*(*M*₁)]. The i g*_{B}* functions to bind the spectrum resource(s) with the identity and public key of the core network device A, that is, authorization of the core network device A is implemented for the specific spectrum resource(s).

Further, after completing the issuance of the first-level credential, the core network device B uploads the first-level credential for verification by other nodes on the block chain (verifying the signature in the credential to confirm that the first-level credential originates from the core network B, the user of the resources in the first-level credential is the core network device A, and the transaction content is the specific spectrum resources owned by the core network B). Upon successful verification, the smart contract is triggered by the core network device B to automatically deduct the fee from the core network A and pay it to the core network device B.

The smart contract mentioned in this operation is a program that automatically executes contracts based on blockchain technology, digitally recording contract rules and terms. It has high timeliness and decentralization characteristics, ensuring that contract participants receive fees promptly and accurately, while adapting to the high-speed demands of 6G era. In addition, conditions of refund may be set in the smart contract, and once the conditions are met, the contract will automatically execute the refund.

In operation 603, after the core network device A receives the deduction notification (which may be sent to the core network device A by the smart contract on block chain), the core network device A downloads the first-level credential from the block chain.

Exemplarily, the operation 603 may be represented as: core network device A ← block chain (smart contract): downloading the first-level credential.

In some possible implementations, the terminal may request the first credential from the second core network device in a network to which it belongs.

Since the first credential is generated based on the second credential obtained after the interaction processing between two networks at the core network level, in some possible examples, the first credential may also be referred to as a second-level credential.

In an embodiment, after the terminal sends the authentication request, the method further includes: sending by the terminal to the second core network device a first resource request message, where the first resource request message is used to request use of the resource of the first network. Further, the method may include: receiving by the terminal a first resource authorization message from the second core network device in the second network, where the first resource authorization message carries the first credential.

The first resource request message may carry at least one of: a temporary identifier of the terminal, or a temporary public key of the terminal.

Here, the temporary identifier of the terminal is generated by the terminal. The specific possible contents or values of the temporary identifier of the terminal are not limited in this embodiment, and as long as the temporary identifier of the terminal is different from the identifier of the terminal, it is within the protection scope of this embodiment. The temporary identifier of the terminal may be used to conceal its real identity from the first core network device. The identifier of the terminal may refer to one of the following: Subscription Permanent Identifier (SUPI) of the terminal, Subscription Concealed Identifier (SUCI) of the terminal, Permanent Equipment Identifier (PEI) of the terminal, 5G Globally Unique Temporary Identifier (5G-GUTI) of the terminal, Internal-Group Identifier (IGI) of the terminal, Generic Public Subscription Identifier (GPSI) of the terminal, and the like.

The temporary public key of the terminal may be generated by the terminal, and the implementation of generating the temporary public key of the terminal is not limited in this embodiment.

Further, the first resource request may further carry at least one of the following: an identifier of the resource of the first network requested for use by the terminal, a third random number, a seventh signature, or a certificate of the terminal.

Here, the resource of the first network requested for use by the terminal may be included in the resource of the first network requested for use by the second core network device. In other words, the resource of the first network requested for use by the terminal may be part or all of the resource of the first network requested for use by the second core network device. For example, the resource of the first network requested for use by the second core network device is resource 0, resource 1, and resource 2, respectively, and the resource requested for use by the terminal may be resource 0 and resource 1 of the first network. It is to be understood that the description herein is merely exemplary and is not intended to be limiting or exhaustive.

The third random number may be generated by the terminal, and the implementation of generating the third random number is not limited in this embodiment.

Optionally, the seventh signature may be obtained by calculating, based on the private key of the terminal, at least one of the following: an identifier of the resource of the first network requested for use by the terminal, a third random number, a temporary identifier of the terminal, or a temporary public key of the terminal.

For example, the calculation of the seventh signature may be: using a signature algorithm to calculate, based on a private key of the terminal, at least one of: the identifier of the resource of the first network requested for use by the terminal, the third random number, the temporary identifier of the terminal, or the temporary public key of the terminal. For example, it may expressed through the following formula: *Sig*[*N*₁,*IDᵥₐ, PKᵥₐ, Nom* ], where N1 is the third random number, *IDᵥₐ* is the temporary identifier of the terminal, *PKᵥₐ* is the temporary public key of the terminal, and Nom is the identifier (or number) of the resource of the first network requested for use by the terminal.

Exemplarily, the calculation of the seventh signature may be: performing hash calculation based on at least one of the following: an identifier of the resource of the first network requested for use by the terminal, a third random number, a temporary identifier of the terminal, or a temporary public key of the terminal, to obtain a seventh hash value; and encrypting the seventh hash value based on the private key of the terminal to obtain the seventh signature. For example, it may expressed through the following formula: *Sig*[*H*(*N*₁, *IDᵥₐ, PKᵥₐ, Nom*])*,* where N1 is the third random number, *IDᵥₐ* is the temporary identifier of the terminal, *PKᵥₐ* is the temporary public key of the terminal, and Nom is the identifier (or number) of the resource of the first network requested for use by the terminal.

Optionally, the seventh signature may be obtained by calculating first ciphertext information based on the private key of the terminal. The first ciphertext information is obtained by using the public key of the second core network device to perform encryption calculation on at least one of the following: an identifier of the resource of the first network requested for use by the terminal, a temporary identifier of the terminal, or a temporary public key of the terminal.

Exemplarily, calculating the first ciphertext information may be expressed as: , where *PK_{A}* is the public key of the second core network device, Enc represents encryption calculation, and the meanings of other parameters in the formula are the same as those in the previous embodiment, and will not be elaborated herein.

Exemplarily, the calculation of the seventh signature may include: using a signature algorithm to calculate the first ciphertext information and the third random number based on the private key of the terminal. For example, it may be expressed through the following formula: *Sig*[*N*₁, *Enc_{PK_{A}}*[*IDᵥₐ, PKᵥₐ*, *Nom*]]. The meanings of parameters in this formula are the same as those of the previous embodiment, and will not be elaborated herein.

Exemplarily, the calculation of the seventh signature may be: performing hash calculation based on the first ciphertext information and the third random number to obtain a seventh hash value; and encrypting the seventh hash value based on the private key of the terminal to obtain the seventh signature. For example, it may be expressed through the following formula: *Sig*[ *H*(*N*₁, *Enc_{PK_{A}}*[*IDᵥₐ*, *PKᵥₐ, Nom*]) ]. The meanings of parameters in this formula are the same as those of the previous embodiment, and will not be elaborated herein.

The certificate of the terminal may be issued by the second core network device for the terminal, and the implementation of issuing or obtaining the certificate of the terminal is not limited in this embodiment.

The certificate of the terminal carries the public key of the terminal. The implementation of generating the public key of the terminal is not limited in this embodiment.

Further, the certificate of the terminal may also carry at least one of the following: an identifier of the second core network device, an identifier of the terminal, or an eighth signature.

The eighth signature may be generated by the second core network device, and the generation occasion for the eighth signature is not limited in this embodiment. The eighth signature may be obtained by calculating at least one of the following: the public key of the terminal or the identifier of the terminal based on a private key of the second core network device.

Exemplarily, the calculation of the eighth signature may be: using a signature algorithm to calculate at least one of a public key of the terminal or an identifier of the terminal based on a private key of the second core network device. For example, it may expressed through the following formula: *Sig*[ *IDₐ*, *PKₐ* ], where *IDₐ* is the identifier of the terminal, and is the public key of the terminal.

Exemplarily, the calculation of the eighth signature may be: performing hash calculation based on at least one of a public key of the terminal or an identifier of the terminal to obtain an eighth hash value; and encrypting the eighth hash value based on a private key of the second core network device to obtain the seventh signature. For example, it may be expressed through the following formula: *Sig*[*H*(*IDₐ, Pkₐ*)]*,* where *Sig_{A}*[] represents calculating the signature using the private key of the second core network device. The meanings of parameters in this formula are the same as those of the previous embodiment, and will not be elaborated herein.

In one embodiment, the processing of the second core network device may include: receiving a first resource request message from the terminal. Further, the method may include: sending by the second core network device a first resource authorization message to the terminal, where the first resource authorization message carries the first credential.

The second core network device may perform the process of sending the first resource authorization message after completing the verification of the first resource request message.

Optionally, when the first resource request message carries the certificate of the terminal, after receiving the first resource request message from the terminal, the second core network device may further verify authenticity of the certificate of the terminal based on the public key of the second core network device. Specifically, the second core network device may verify the authenticity of the certificate of the terminal based on its public key and the eighth signature in the certificate of the terminal. For example, the above verification processing may include: using a signature verification algorithm to decrypt the eighth signature based on the public key of the second core network device, to obtain an eighth to-be-verified parameter; and when the eighth to-be-verified parameter is the same as the identifier of the terminal and the public key of the terminal, determining that the verification for the authenticity of the certificate of the terminal is passed. Alternatively, the above verification processing may include: performing a hash calculation based on the identifier of the terminal and the public key of the terminal to obtain an eighth verification hash value; decrypting the eighth signature based on the public key of the second core network device to obtain an eighth decryption value; and determining that the verification based on the identifier of the terminal and the public key of the terminal is passed when the eighth decrypted value and the eighth verification hash value.

Optionally, when the first resource request message carries the seventh signature, after receiving the first resource request message from the terminal, the second core network device may further verify validity of the first resource request message (i.e., the first resource request message is not tampered) based on the public key of the terminal (which may be the public key of the terminal carried in the certificate of the terminal). For example, the above verification processing may include: using a signature verification algorithm to decrypt the seventh signature based on the public key of the terminal to obtain a seventh to-be-verified parameter; and when the seventh to-be-verified parameter is the same as parameter(s) carried in the first resource request message (excluding the first signature and the certificate of the terminal), determining that the verification for the validity of the first resource request message is passed. Alternatively, the above verification processing may include: performing a hash calculation based on the parameter(s) carried in the first resource request message (excluding the first signature and the certificate of the terminal) to obtain a seventh verification hash value; decrypting the seventh signature based on the public key of the terminal to obtain a seventh decryption value; and determining that the verification based on the identifier of the terminal and the public key of the terminal is passed when the seventh decryption value and the seventh verification hash value.

In addition, the method may further include that: if the verification of the first resource request message fails, the second core network device may terminate the processing and/or send a response message of false verification to the terminal.

Optionally, when the first resource request message carries first ciphertext information, the second core network device may perform the following processing: using the public key of the second core network device to decrypt the first ciphertext information to obtain at least one of the following: an identifier of the resource of the first network requested for use by the terminal, a temporary identifier of the terminal, or a temporary public key of the terminal.

The first credential includes at least a first signature and a second signature. Herein, the second signature is carried by a second credential in the first credential. Specifically, the first credential includes the first signature and the second credential, and the first credential further includes at least one of: the temporary identifier of the terminal, or the temporary public key of the terminal. The implementation of generating the second credential has been described in detail in previous embodiment, and will not be repeated here.

Optionally, the first signature is calculated based on the private key of the second core network device and at least one of: the temporary identifier of the terminal, the temporary public key of the terminal, or the second credential.

Exemplarily, the calculation of the first signature may include: using a signature algorithm to calculate at least one of the temporary identifier of the terminal, the temporary public key of the terminal, or the second credential based on the private key of the second core network device. For example, assuming that the second credential, the temporary identifier of the terminal, and the temporary public key of the terminal are denoted as M2, the calculation of the first signature may be expressed by the following formula: *Sig_{A}*[M2]*.*

Exemplarily, the calculation of the first signature may include: performing hash calculation based on at least one of the temporary identifier of the terminal, the temporary public key of the terminal, or the second credential, to obtain a first hash value; and encrypting the first hash value based on the private key of the second core network device to obtain the first signature. For example, assuming that the second credential, the temporary identifier of the terminal, and the temporary public key of the terminal are denoted as M2, the calculation of the first signature may be expressed by the following formula: *Sig_{A}*[*H*(*M*2)].

The first credential generated using the above scheme may enable signing and binding of the second credential, the temporary identifier *IDᵥₐ* of the terminal and the temporary public key *PKᵥₐ* of the terminal through the private key of the second core network device, so that the authorization of the resource of the first network requested for use by the terminal is realized through the first credential.

Optionally, the first resource authorization message may further carry a fourth random number. Herein, the fourth random number is used to indicate that the first resource authorization message is not being replayed. The fourth random number is related to the third random number. For example, the fourth random number may be equal to the third random number. For example, the fourth random number may be equal to the third random number plus a first specified value, where the first specified value may be configured according to the actual situation. In some examples, the first specified value may be equal to 1, that is, the fourth random number is equal to the third random number plus 1. In some other examples, the first specified value may be greater than 1. All possible values of the first specified value are not limited or exhaustive here.

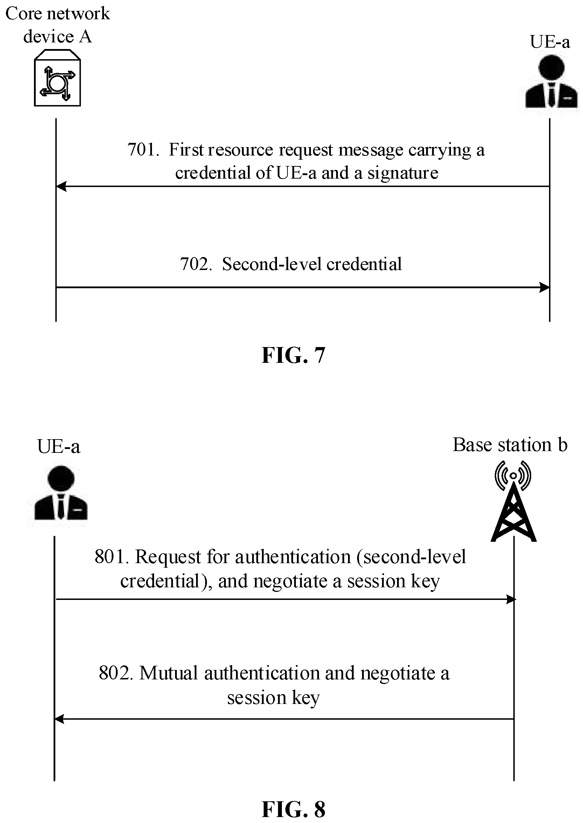

The following gives description for the processing of issuing the second credential in combination with the second embodiment. In the second embodiment, as an example, the first credential is a second-level credential, the terminal is denoted as UE-a, the first core network device is denoted as core network device B (or core network B), and the second core network device is denoted as core network device A (or core network A). The flow of second embodiment is summarized as follows. When UE-a within the coverage of core network A applies for spectrum resources from the core network A, the core network A binds the first-level credential with a temporary identity *IDᵥₐ* and a temporary public key *PKᵥₐ* of UE-a (signed by core network A using its private key) and generate a second-level credential, to realize authorization of the spectrum resources. The temporary identity of UE-a may enable to conceal its real identity from the service provider, thereby achieving privacy protection. The following gives illustrative description for the processing of issuing the second-level credential involved in the second embodiment in combination with FIG. 7, including operations S701, 702.

In operation 701, UE-a within the coverage of operator A sends to core network device A a first resource request message, which carries a certificate *Cert_{A-a}* of UE-a, a signature *Sig* (i.e., the seventh signature in previous embodiments), a third random number N1, and first ciphertext information.

Exemplarily, the operation 701 may be represented as: UE-a → core network device : *Cert_{A-a}, N*₁, *Enc_{PK_{A}}*[*IDᵥₐ*, *PKᵥₐ*, *Nom*], *Sig*[ *H*(*N*₁, *Enc_{PK_{A}}*[*IDᵥₐ, PKᵥₐ, Nom*]) . The meanings of parameters in this formula are the same as those of the previous embodiment, and will not be elaborated herein.

The specific contents carried by a certificate *Cert_{A-a}* of the UE-a are shown in Table 3:

**Table 3**

| includes: | | | |
|---|---|---|---|
| Issuer *ID_{A}* (ID of core network device A) | *IDₐ* (ID of UE-a) | (Public Key of UE-a) | *Sig_{A}*[*H*(*IDₐ, Pkₐ*)] |

Herein, the certificate *Cert_{A-a}* of UE-a and the signature *Sig* may enable the core network A to verify that the identity of user a is legitimate and the message is complete, that is, the message originates from user a and has not been tampered with (*Cert_{A-a}* in the request is issued to the user a by core network A, so the authenticity of the certificate may be verified by using the public key of the core network A. After trusting the certificate *Cert_{A-a}*, the public key in the certificate may be used to verify the signature *Sig* sent by user a. If the signature verification is successful, it indicates that the message does originate from the user a and the message has not been tampered with). *Nom* (identifier (or number) of resources of a network, where core network device B is located, that are requested for use by UE-a) indicates the spectrum resource to be applied by the UE-a. The third random number *N*₁ indicates the freshness of session. *Enc*_{*PK*_{A}}[*IDᵥₐ*, *PKᵥₐ*, *Nom*] corresponds to a ciphertext of the temporary identity of UE-a, so that the correspondence between its real identity and the temporary identity will not be leaked.

In operation 702, after verifying the reliability of the received first resource request message, the core network device A sends to the UE-a a first resource authorization message, which carries the second-level credential.

Exemplarily, the operation 702 may be represented as: core network device A → UE-a: *Enc*[ *Cert_{B-A-a}*], *N*₁ + 1 ; where *Cert_{B-A-a}* represents the second-level credential; "N1+1" denotes a fourth random number.

*N*₁ + 1 indicates that the message is not being replayed; and the second-level credential implements the authorization of spectrum resources. The second-level credential is to bind the first-level credential with the temporary identity *IDᵥₐ* and temporary public key *PKᵥₐ* of user a (signed by core network device A using its private key).

The contents contained or carried in the second-level credential is as shown in Table 4:

**Table 4**

| Second-level credential *Cert_{B-A-a}* includes: | | | | | | | | |
|---|---|---|---|---|---|---|---|---|
| *ID_{B}* | *PK_{B}* | - tt | *ID_{A}* | *PK_{A}* | *Sig_{B}*[*H*(*M*₁)] | *IDᵥₐ* | *PKᵥₐ* | *Sig_{A}*[*H*(*M*₂)] |

Specifically, *ID_{B}*, *PK_{B},* - tt *, ID_{A}, PK_{A}, Sig_{B}*[*H(M*₁)] are contents of the first-level credential, for which the specific description is the same as the related description in FIG. 6 and will not be repeated here. The M2 includes all the contents of the first-level credential as well as *IDᵥₐ*, *PKᵥₐ.*

In some possible implementations, when the terminal accesses a roaming network (i.e., the first network), relevant authentication processing needs to be performed by a network device providing the roaming network.

In one embodiment, the terminal may send an authentication request to an access network device after receiving the first resource authorization message carrying the first credential.

Optionally, the authentication request carries a first credential, and the first credential carries at least one of: a first signature for verifying an authority of the terminal to use a resource of the first network authorized for the second network, or a second signature for verifying an authority of the second network to use the resource of the first network.

The first credential further carries at least one of: a temporary identifier of the terminal, or a temporary public key of the terminal.

The second signature is carried by a second credential in the first credential, and the second credential further carries at least one of: an identifier of a first core network device in the first network, a public key of the first core network device, an identifier of a second core network device in the second network, a public key of the second core network device, or information about the resource of the first network authorized for use by the second network.

The detail description of the first credential and the second credential is identical to the foregoing embodiment, and will not be repeated here.

Optionally, in addition to the first credential, the authentication request further carries at least one of: an identifier of the first network device, a first random number, or a first security parameter for calculating a communication key between the terminal and the first network device.

The authentication request further carries a third signature for verifying a validity of the authentication request, and the third signature is calculated based on a temporary private key of the terminal and at least one of the following: an identifier of the first network device, a first random number, or a first security parameter for calculating a communication key between the terminal and the first network device. The temporary private key of the terminal is generated locally by the terminal, and the specific generation thereof is not limited herein.

The identifier of the first network device may refer to an identifier of an access network device, or an identifier of a third core network device. It should be understood that the identifier of the first network device may also be further combined with other identifiers associated with the first network, for example, at least one of the following: an identifier of the first network (such as PLMN ID, etc.), a cell-related identifier of the first network, etc. Here, the cell-related identifier may include at least one of Cell-RNTI Radio Network Temporary Identity (C-RNTI), PCI, or the like.

Exemplarily, the calculation of the third signature may be implemented by using a signature algorithm to calculate at least one of the identifier of the first network device, the first random number, or the first security parameter.

Exemplarily, the calculation of the third signature may include: performing hash calculation based on at least one of the following: the identifier of the first network device, the first random number, or the first security parameter to obtain a third hash value; and encrypting the third hash value based on the private key of the terminal to obtain the third signature. For example, the calculation of the third signature is expressed through the following formula: *Sigᵥₐ*[*H*(*ID_{b}, N, Xᵥₐ* · *P*)]*,* where *Sigᵥₐ*[] indicates calculating the signature using the temporary private key of the terminal, H () indicates a hash function, *ID_{b}* is the identifier of the first network device, *N* is the first random number, and "*Xᵥₐ* · *P"* is the first security parameter.

In one embodiment, after receiving the authentication request, the first network device first verifies the authentication request and its related contents.

Optionally, the authority of the second network to use the resource of the first network is verified based on the public key of the first core network device, the second signature and at least one of the following: the identifier of the first core network device, the public key of the first core network device, the identifier of the second core network device, the public key of the second core network device, or the information about the resource of the first network authorized for use by the second network.

For example, the above verification processing may include: using a signature verification algorithm to decrypt a second signature based on the public key of the first core network device, to obtain a second to-be-verified parameter; and determining that the verification of the authority of the second network to use the resource of the first network is passed when the second to-be-verified parameter is the same as an identifier of the second core network device, a public key of the second core network device, an identifier of the first core network device, a public key of the first core network device, or the information about the resource of the first network authorized for use by the second network. Alternatively, the above verification processing may include: performing a hash calculation based on at least one of the following: the identifier of the first core network device, the public key of the second core network device, the identifier of the first core network device, the public key of the first core network device, or the information about the resource of the first network authorized for use by the second network, to obtain a second verification hash value; decrypting the second signature based on the public key of the second core network device to obtain a second decryption value; and determining that the verification of the authority of the second network to use the resource of the first network is passed when the second decryption value and the second verification hash value are the same.

In addition, the method further includes: when the verification of the authority of the second network to use the resource of the first network fails, the processing may be terminated and/or a false authentication result may be returned to the terminal by the first network device.

Optionally, the processing of verification based on the first signature by the first network device may include: verifying the authority of the terminal to use the resource of the first network authorized for the second network based on the public key of the second core network device, the first signature, and at least one of the following: the temporary identifier of the terminal, the temporary public key of the terminal, or the second credential.

Specifically, the authority of the terminal to use the resource of the first network is verified based on the public key of the second core network device, the first signature and at least one of the following: the temporary identifier of the terminal, the temporary public key of the terminal, the identifier of the second core network device, the public key of the second core network device, the identifier of the first core network device, the public key of the first core network device, or information on the resource of the first network authorized for use by the second network.

For example, the above verification processing may include: using a signature verification algorithm to decrypt the first signature based on the public key of the first core network device, to obtain a first to-be-verified parameter; and determining that the verification is passed when the first to-be-verified parameter is the same as the temporary identifier of the terminal, the temporary public key of the terminal, the second signature, the identifier of the second core network device, the public key of the second core network device, the identifier of the first core network device, the public key of the first core network device, or information about the resource of the first network authorized for use by the second network. Alternatively, the above verification processing may include: performing hash calculation based on the temporary identifier of the terminal, the temporary public key of the terminal, the second signature, the identifier of the second core network device, the public key of the second core network device, the identifier of the first core network device, the public key of the first core network device, or the information about the resource of the first network authorized for use by the second network, to obtain a first verification hash value; decrypting the first signature based on the public key of the second core network device to obtain a first decryption value; and determining that the verification is passed when the first decryption value and the first verification hash value are the same.

The processing sequence of performing the verification based on the first signature and the second signature in the first credential may be as follows. Firstly, the authority of the second network to use the resource of the first network is verified based on the public key of the first core network device and the second signature; and when the verification is passed, it is determined that the public key of the second core network device carried in the second credential is trusted. Further, authentication of the terminal is performed based on the public key of the second core network device and the first signature. This is because the first network device itself belongs to the first network, so the first network device may regard by default the public key of the first core network device as trusted, and may thus perform verification based on the public key of the first core network device and the second signature first.

Optionally, the first network device may verify the validity of authentication message based on the third signature. Specifically, it may include: verifying validity of the authentication request based on the temporary public key of the terminal, the third signature, and at least one of the following: the identifier of the first network device, the first random number, or the first security parameter for calculating the communication key between the terminal and the first network device. Since the verification of the second signature in the first certificate is passed first, it may be determined that the temporary public key of the terminal carried in the first credential is trusted. Then, the verification of the third signature may be performed based on the temporary public key of the terminal.

For example, the above verification processing may include: using a signature verification algorithm to decrypt the third signature based on the temporary public key of the terminal, to obtain a third to-be-verified parameter; and when the third to-be-verified parameter is the same as the identifier of the first network device, the first random number and the first security parameter, determining that the verification for the validity of the authentication message is passed. Alternatively, the above verification processing may include: performing hash calculation based on the identifier of the first network device, the first random number and the first security parameter, to obtain a third verification hash value; decrypting the third signature based on the temporary public key of the terminal to obtain a third decryption value; and determining that the verification for the validity of the authentication message is passed when the third decryption value and the third verification hash value are the same.

In addition, the method further includes that: when the verification for the validity of the authentication message fails, the processing may be terminated and/or a false authentication result may be returned to the terminal by the first network device.

In one embodiment, the first network device may send an authentication response to the terminal after performing the aforementioned one or more authentication processing based on the authentication request and upon successful verification. The method further includes: sending an authentication response to the terminal, where the authentication response carries a certificate of the first network device, and the certificate of the first network device includes a fourth signature for authentication of the first network device. On the terminal side, the method further includes: receiving an authentication response from the first network device by the terminal. The authentication response carries a certificate of the first network device, and the certificate of the first network device includes a fourth signature for authentication of the first network device.

The authentication response may also carry an authentication result, which may indicate that authentication of the terminal is passed.

Optionally, the certificate of the first network device further includes at least one of: an identifier of the first core network device, an identifier of the first network device, or a public key of the first network device. The certificate of the first network device may be issued for the first network device by the first core network device.

On the terminal side, the method further includes: authenticating the first network device by the terminal based on the public key of the first core network device, the fourth signature, and at least one of the identifier of the first network device or the public key of the first network device.

For example, the above verification processing may include: using a signature verification algorithm to decrypt the fourth signature based on the public key of the first core network device, to obtain a fourth to-be-verified parameter; and determining that the authentication of the first network device is passed, when the fourth to-be-verified parameter is the same as the identifier of the first network device and the public key of the first network device. Alternatively, the above verification processing may include: performing hash calculation based on the identifier of the first network device and the public key of the first network device to obtain a fourth verification hash value; decrypting the fourth signature based on the public key of the first core network device to obtain a fourth decryption value; and determining that the authentication of the first network device is passed when the fourth decryption value and the fourth verification hash value are the same.

In addition, the method further includes: when the authentication of the first network device fails, the processing is terminated and/or a false authentication result is returned to the first network device by the terminal.

Optionally, the authentication response further carries at least one of: a temporary identifier of the terminal, a second random number, or a second security parameter for calculating a communication key between the terminal and the first network device.

The authentication response further carries a fifth signature for verifying a validity of the authentication response. The fifth signature is calculated based on a private key of the first network device and at least one of the following: a temporary identifier of the terminal, a second random number, or a second security parameter for calculating a communication key between the terminal and the first network device.

The second random number is used to indicate that the message is not being replayed. The second random number is related to the first random number. For example, the second random number may be equal to the first random number. For example, the second random number may be equal to the first random number plus a second specified value, where the second specified value may be configured according to the actual situation. In some examples, the second specified value may be equal to 1, that is, the second random number is equal to the first random number plus 1. In some other examples, the second specified value may be greater than 1. All possible values of the second specified value are not limited or exhaustive herein.

Exemplarily, on the first network device side, the calculation of the fifth signature may be implemented by using a signature algorithm to calculate at least one of the temporary identifier of the terminal, the second random number, or the second security parameter.

Exemplarily, on the first network device side, the calculation of the first signature may include: performing hash calculation based on at least one of the temporary identifier of the terminal, the second temporary number, or the second security parameter, to obtain a fifth hash value; and encrypting the fifth hash value based on the private key of the first core network device to obtain the fifth signature. For example, the calculation of the fifth signature is expressed through the following formula: *Sig_{b}*[*H*(*IDᵥₐ, N +* 1, *X_{b}* · *P*)*,* where *Sig_{b}*[] indicates calculating signature by using the private key of the first network device, H ( ) indicates a hash function, *IDᵥₐ* is the temporary identifier of the terminal, *N +* 1 is the second random number, and "*X_{b}* · *P"* is the second security parameter.

On the terminal side, the method further includes: verifying the validity of the authentication response based on the public key of the first network device, the fifth signature, and at least one of the following: the temporary identifier of the terminal, the second random number, or the second security parameter.

The public key of the first network device may be carried in the certificate of the first network device. After verifying the certificate of the first network device to confirm that the authentication of the first network device is passed, the terminal may confirm that the public key of the first network device is authentic and trusted. Then, the terminal performs validity verification on the authentication response based on the public key of the first network device and the fifth signature.

For example, the above verification processing by the terminal may include: using a signature verification algorithm to decrypt the fifth signature based on the public key of the first network device, to obtain a fifth to-be-verified parameter; and when the fifth to-be-verified parameter is the same as the temporary identifier of the terminal, the second random number and the second security parameter, determining that the validity verification for the authentication response is passed. Alternatively, the above verification processing may include: performing hash calculation based on the temporary identifier of the terminal, the second random number and the second security parameter, to obtain a fifth verification hash value; decrypting the fifth signature based on the public key of the first network device to obtain a fifth decryption value; and determining that the validity verification for the authentication response is passed when the fifth decryption value and the fifth verification hash value are the same.

In addition, the method further includes that: when the validity verification for the authentication response fails, the processing is terminated and/or a false authentication result is returned to the first network device.

Further, through the above mutual authentication between the terminal and the first network device, the first network device can obtain the first security parameter sent by the terminal, and the first network device has generated the second security parameter locally; the terminal can obtain the second security parameter sent by the first network device, and the terminal has generated the first security parameter locally. Therefore, the processing performed on the terminal side and first network device side respectively may include: calculating the communication key between the terminal and the first network device based on the first second security parameter and the second security parameter. In this way, the terminal and the first network device obtain the same communication key, and can subsequently communicate through this communication key (or session key).

The following gives description for the processing of using the first credential above in combination with the third embodiment. In the third embodiment, as an example, the first credential is a second-level credential, the terminal is denoted as UE-a, the first network device is base station b, and the first core network device to which the first network device belongs is core network device B (or core network B). The related description is summarized as follows. UE-a may access the base station B belong to the core network B by using the second-level credential, and the UE-a may smoothly use the spectrum resources when mutual authentication between the UE-a and the base station B is completed. The processing of using the second-level credential provided in the third embodiment is explained in combination with FIG. 8, including operations 801, 802.

In operation 801, UE-a requests access to base station b managed by core network device B. Specifically, the UE-a requests authentication from the base station B and negotiate a session key with the base station B. The request issued by the UE-1 may carry a second-level credential, a first security parameter *Xᵥₐ · P* for calculating a session key between the UE-a and the base station b, and the like.

Exemplarily, the operation 801 may be represented as:
UE-a → Base ta tion b: *Cert_{B-A-a}, ID_{b}, N, Xᵥₐ · P, Sigᵥₐ*[*H*(*ID_{b}, N, Xᵥₐ · P*)].

Specifically, the authentication request may carry: *Cert_{B-A-a},* i.e., the second-level credential; *Sigᵥₐ,* which may enable the base station b to ensure that the identity of *IDᵥₐ* is legitimate and the request message has not been tampered with (in the second-level credential, *Sig_{B}* may enable b to trust the public key *PK_{A}* of A, and *Sig_{A}* may enable b to trust the public key *PKᵥₐ*); *ID_{b},* indicating the identity of the base station b to be accessed, the first random number *N,* which may indicate the freshness of session, and *Xᵥₐ · P*, which is a DH parameter (i.e., first security parameter) used for the UE-a to negotiate the session key.

In operation 802, after verifying the reliability of the received request message, the base station b performs mutual authentication with the UE-a and negotiates the session key.

Exemplarily, the operation 802 may be represented as: base station b → UE-a: *Cert_{B-b}, IDᵥₐ, N +* 1, *X_{b}* · *P, Sig_{b}*[*H*(*IDᵥₐ, N + 1, X_{b}* · *P*)]*.*

Specifically, the base station b provides the UE-a with its own identity credential, i.e., certificate *Cert_{B-b}* of the base station b. The certificate *Cert_{B-b}* and signature *Sig_{b}* may enable UE-a to verify that the received message originates from the base station b and that the message has not been tampered with (*Cert_{B-b}* is a certificate issued by the core network B to the base station b), *N* + 1 is a second random number and indicates that the message is not being replayed, *IDᵥₐ* indicates that the base station b has received a request (authentication request) from the UE-a, and *X_{b} · P* is a DH parameter (i.e., second security parameter) used for the base station b to negotiate the session key.

The certificate of the base station b includes the following as shown in Table 5:

**Table 5**

| *Cert_{B-b}* including: | | | |
|---|---|---|---|
| Issuer *ID_{B}* (ID of core network device B) | *ID_{b}* (ID of base station b) | *PK_{b}* (Public key of base station b) | *Sig_{B}*[*ID_{b}, PK_{b}*] (Fourth signature in the foregoing embodiment) |

Here, *ID_{b}* may be further combined with other identifiers, such as at least one of PLMN ID (i.e., identifier of the first network), C-RNTI, PCI, and the like.

It should also be noted that this example is an exemplary description taking the first network device as a base station. In some other examples, the first network device may be a third core network device in the first network, and in this case, the above *ID_{b}* may be replaced with the ID of the third core network device and may be further combined with at least one of the PLMN ID, C-RNTI, PCI, and the like.

After the negotiation between the base station b and the UE-a is completed, both base station b and UE-a calculate and obtain a session key *X_{b}* · *Xᵥₐ · P* respectively, and may subsequently communicate using the session key.

In some possible implementations, if the terminal fails to access the network in which the first network device is located, the terminal may send information of access failure or registration failure to the second core network device.

After receiving the authentication request, the method further includes: the first network device sends a denial-of-service response message to the terminal when it is determined to reject the terminal's access to the network based on local policies.

The denial-of-service response message may carry denial-of-service indication information, a denial-of-service credential, a certificate of the first network device, a temporary identifier of the terminal, a first credential, and a first random number.

The denial-of-service credential may be a ninth signature, and the ninth signature is obtained by using a private key of the first network device to perform calculation for the denial-of-service indication information and at least one of the following: a temporary identifier of the terminal, a first credential, or a first random number. The algorithm for the ninth signature is similar to the algorithm for the signatures in the previous embodiments, and repeated descriptions are committed herein.

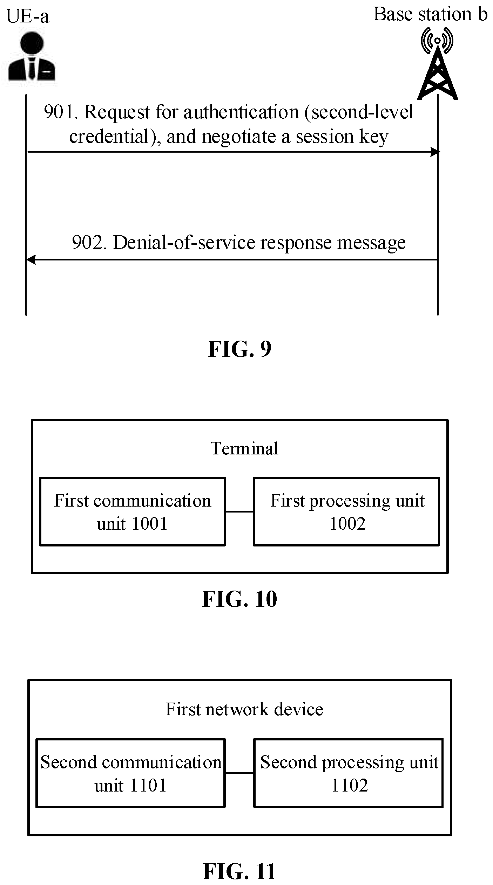

The following gives description for the processing that the first network device rejects the service in combination with the fourth embodiment. In the fourth embodiment, it is explained by taking an example that the terminal is denoted as UE-a, the first core network device is denoted as core network device B (or core network B), and the first network device is denoted as base station b. Specifically, as shown in FIG. 9, it includes operations 901, 902.

The operation 901 is the same as operation 801, and will not be repeated.

In operation 902, base station b provides policy-based denial of service (e.g., prioritizing local users), and at this time, the base station b sends a denial-of-service response message to UE-a. Exemplarily, the operation 902 may be represented as: base station b → UE-a: *Cert_{B-A-a}, IDᵥₐ, N,* False, *Cert_{B-b}, Sig_{b}*[*H*(*M*)] , where False indicates the denial-of-service indication information, *Sig_{b}*[*H*(*M*)] indicates the ninth signature, and M includes the second-level credential, the temporary identifier of UE-a, the denial-of-service indication information, and the first random number N.

In some embodiments, after receiving from the first network device an authentication response for indicating that service is denial to the terminal, the method may further include: the terminal sends a denial-of-service credential to the second core network device.

Optionally, the terminal sending the denial-of-service credential to the second core network device mean that the terminal sends all contents contained in the authentication response to the second core network device. Alternatively, it may be meant that the terminal sends to the second core network device the denial-of-service credential and at least one of the following: the denial-of-service indication information, the certificate of the first network device, the temporary identifier of the terminal, the first credential, or the first random number.

After receiving the denial-of-service credential, the second core network device may also verify the denial-of-service credential. For example, the denial-of-service credential may be a ninth signature. The second core network device may perform verification based on the public key of the first network device, the ninth signature, and at least one of the following: the denial-of-service indication information and at least one of the following: the denial-of-service indication information, the certificate of the first network device, the temporary identifier of the terminal, the first credential, or the first random number. The specific processing for verifying the ninth signature is similar to the process of verifying the signature described above, and will not be repeated.

The processing of the second core network device may further include: uploading all received denial-of-service credentials to the block chain when the second credential expires. Correspondingly, after receiving all denial-of-service credentials from the second core network device, upon the verification for all the denial-of service-credentials is passed, nodes (other nodes) on the block chain deduct corresponding fees from the first core network device.

The validity period of the second certificate may be the same as the usage duration during which the second core network device requests to use the resource of the first network.

Uploading all the received denial-of-service credentials to the block chain may mean that all the received denial-of-service credentials and a parameter(s) related to each denial-of-service credential are uploaded to the block chain. The parameter(s) related to each denial-of-service credential may include: denial-of-service indication information for each denial, a certificate of the first network device corresponding to each denial-of-service credential, a temporary identifier of the terminal corresponding to each denial-of-service credential, the first credential, and a first random number corresponding to each denial-of-service credential.

The verification for any one of the denial-of-service credentials by the nodes on the block chain being passed may mean that upon successful verification of the ninth signature using the public key of the first network device, it is determined that the verification of the denial-of-service credentials has passed.

By adopting the above solution, when a terminal accesses a first network to which it does not belong, it can send, to a network device in the first network, a first credential for verifying an authority of the terminal belonging to the second network to use a resource of the first network. In this way, when the terminal needs to access another network, authentication of the terminal can be realized by simply using the first credential, which not only ensures security but also improves authentication efficiency, thereby avoiding issues such as low efficiency caused by the fact that a core network device is required to perform security calculations for authentication in related technologies.

The above blockchain-based secure solution for inter-operator spectrum resource sharing achieves secure authentication, charging, user ID privacy protection, and dispute bill handling. Specifically, the invention can enable networks belonging to different operators to securely share their idle licensed spectrum and charge efficiently while protecting the privacy of users. By utilizing the high timeliness and decentralization characteristics of smart contracts, it supports terminals in using the shared spectrum resources of roaming networks without disclosing their locations, consumption records, etc.

Furthermore, the invention adopts a whole-lease mode charging, that is, when all terminals under a certain operator's network use shared spectrum of another operator's network, the contract between the two networks is that all terminal bills are aggregated and settled between the operators, and only abnormal bills for denial of service are uploaded to the block chain to avoid disputes. The above solution provided in this embodiment can meet the demand for efficient spectrum sharing in the 6G era.

In addition, in the above solution, privacy information of the terminal, such as its identifier, public key, is concealed. When the terminal accesses a network to which it does not belong, it uses the concealed temporary identifier, concealed temporary public key, signature and the like to complete authentication, thereby ensuring the privacy and security of the terminal.

FIG. 10 is a schematic diagram of composition structure of a terminal according to an embodiment of the present application. The terminal includes a first communication unit 1001.

The first communication unit 1001 is configured to send an authentication request to a network device in a first network, where the authentication request carries a first credential for verifying an authority of the terminal belonging to a second network to use a resource of the first network.

The first credential carries at least one of: a first signature for verifying an authority of the terminal to use a resource of the first network authorized for the second network, or a second signature for verifying an authority of the second network to use the resource of the first network.

The first credential further carries at least one of: a temporary identifier of the terminal, or a temporary public key of the terminal.

The second signature is carried by a second credential in the first credential, and the second credential further carries at least one of: an identifier of a first core network device in the first network, a public key of the first core network device, an identifier of a second core network device in the second network, a public key of the second core network device, or information about the resource of the first network authorized for use by the second network.

The authentication request further carries a third signature for verifying a validity of the authentication request, and the third signature is calculated based on a temporary private key of the terminal and at least one of the following: an identifier of the first network device, a first random number, or a first security parameter for calculating a communication key between the terminal and the first network device.

The authentication request further carries at least one of: an identifier of the first network device, a first random number, or a first security parameter for calculating a communication key between the terminal and the first network device.

The first communication unit 1001 is configured to receive an authentication response from the first network device, where the authentication response carries a certificate of the first network device, and the certificate of the first network device includes a fourth signature for authentication of the first network device.

The certificate of the first network device further includes at least one of: an identifier of the first core network device in the first network, an identifier of the first network device, or a public key of the first network device.

As illustrated in FIG. 10, the terminal further includes a first processing unit 1002, configured to authenticate the first network device based on the public key of the first core network device, the fourth signature, and at least one of the identifier of the first network device or the public key of the first network device.

The authentication response further carries a fifth signature for verifying a validity of the authentication response.

The authentication response further carries at least one of: a temporary identifier of the terminal, a second random number, or a second security parameter for calculating a communication key between the terminal and the first network device.

The first processing unit 1002 is configured to verify the validity of the authentication response based on the public key of the first network device, the fifth signature, and at least one of the following: the temporary identifier of the terminal, the second random number, or the second security parameter.

The first processing unit 1002 is configured to calculate the communication key between the terminal and the first network device based on the second security parameter and the first security parameter.

The first communication unit 1001 is configured to receive a first resource authorization message from a second core network device in the second network, where the first resource authorization message carries the first credential.

The first communication unit 1001 is configured to send a first resource request message to the second core network device, where the first resource request message is used to request use of the resource of the first network.

The first resource request message carries at least one of: a temporary identifier of the terminal, or a temporary public key of the terminal.

The first network device includes one of the following: an access network device, or a third network core network device.

FIG. 11 is a schematic diagram of composition structure of a first network device according to an embodiment of the present application. The first network device includes a second communication unit 1101.

The second communication unit 1101 is configured to receive an authentication request from a terminal, where the authentication request carries a first credential for verifying an authority of the terminal belonging to a second network to use a resource of a first network, and the first network device belongs to the first network.

The first credential carries at least one of: a first signature for verifying an authority of the terminal to use a resource of the first network authorized for the second network, or a second signature for verifying an authority of the second network to use the resource of the first network.

The first credential further carries at least one of: a temporary identifier of the terminal, or a temporary public key of the terminal.

The second signature is carried by a second credential in the first credential, and the second credential further carries at least one of: an identifier of a first core network device in the first network, a public key of the first core network device, an identifier of a second core network device in the second network, a public key of the second core network device, or information about the resource of the first network authorized for use by the second network.

As illustrated in FIG. 11, the first network device further includes a second processing unit 1102, configured to verify the authority of the terminal to use the resource of the first network authorized for the second network based on the public key of the second core network device, the first signature, and at least one of the following: the temporary identifier of the terminal, the temporary public key of the terminal, or the second credential.

The second processing unit 1102 is configured to verify the authority of the second network to use the resource of the first network based on the public key of the first core network device, the second signature and at least one of the following: the identifier of the first core network device, the public key of the first core network device, the identifier of the second core network device, the public key of the second core network device, or the information about the resource of the first network authorized for use by the second network.

The authentication request further carries a third signature for verifying a validity of the authentication request.

The authentication request further carries at least one of: an identifier of the first network device, a first random number, or a first security parameter for calculating a communication key between the terminal and the first network device.

The second processing unit 1102 is configured to verify the validity of the authentication request based on the temporary public key of the terminal, the third signature, and at least one of the following: the identifier of the first network device, the first random number, or the first security parameter for calculating the communication key between the terminal and the first network device.

The second communication unit 1101 is configured to send an authentication response to the terminal, where the authentication response carries a certificate of the first network device, and the certificate of the first network device includes a fourth signature for authentication of the first network device.

The certificate of the first network device further includes at least one of: an identifier of the first core network device in the first network, an identifier of the first network device, or a public key of the first network device.

The authentication response further carries a fifth signature for verifying a validity of the authentication response, and the fifth signature is calculated based on a private key of the first network device and at least one of the following: a temporary identifier of the terminal, a second random number, or a second security parameter for calculating a communication key between the terminal and the first network device.

The authentication response further carries at least one of: an identifier of the terminal, a second random number, or a second security parameter for calculating a communication key between the terminal and the first network device.

The second processing unit 1102 is configured to calculate the communication key between the terminal and the first network device based on the second security parameter and the first security parameter.

The first network device includes one of the following: an access network device, or a third network core network device.

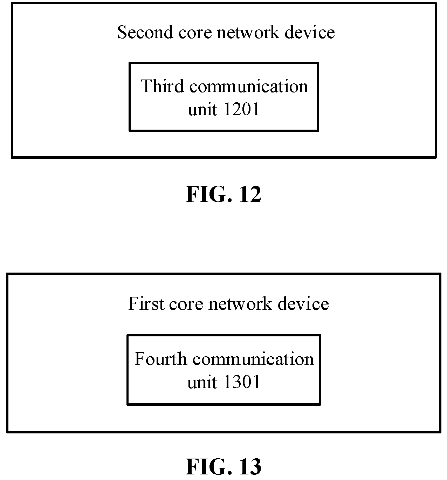

FIG. 12 is a schematic diagram of composition structure of a second core network device according to an embodiment of the present application. The second core network device includes a third communication unit 1201.

The third communication unit 1201 is configured to send a first resource authorization message to a terminal, where the first resource authorization message carries a first credential for verifying an authority of the terminal belonging to a second network to use a resource of a first network, and the second core network device belongs to the second network.

The first credential carries at least one of: a first signature for verifying an authority of the terminal to use a resource of the first network authorized for the second network, or a second signature for verifying an authority of the second network to use the resource of the first network.

The first credential further includes at least one of: a temporary identifier of the terminal, or a temporary public key of the terminal.

The second signature is carried by a second credential in the first credential, and the second credential further carries at least one of: an identifier of the second core network device, a public key of the second core network device, an identifier of the first core network device, a public key of the first core network device, or information about resources of a network where the first core network device is located that are authorized for use by the second network.

The first signature is calculated based on a private key of the second core network device and at least one of: a temporary identifier of the terminal, a temporary public key of the terminal, or the second credential.

The third communication unit 1201 is configured to receive a first resource request message from the terminal, where the first resource request message is used to request use of the resource of the first network.

The first resource request message carries at least one of: a temporary identifier of the terminal, or a temporary public key of the terminal.

The third communication unit 1201 is configured to send a second resource request message to the first core network device, where the second resource request message is used to request use of the resource of the first network; and download the second credential from block chain.

FIG. 13 is a schematic diagram of composition structure of a first core network device according to an embodiment of the present application. The first core network device includes a fourth communication unit 1301.

The fourth communication unit 1301 is configured to upload a second resource authorization message to a block chain, where the second resource authorization message carries a second credential, and the second credential carries a second signature for verifying an authority of a second network to use a resource of a first network, and the first core network device belongs to the first network.

The second signature is calculated based on a private key of the first core network device and at least one of the following: an identifier of the first core network device, a public key of the first core network device, an identifier of a second core network device in the second network, a public key of the second core network device, or information about the resource of the first network authorized for use by the second network.

The second credential further carries at least one of the following: an identifier of the second core network device, a public key of the second core network device, an identifier of the first core network device, a public key of the first core network device, or information about a resource of the first network authorized for use by the second network.

The fourth communication unit 1301 is configured to receive a second resource request message from a second core network device in the second network, where the second resource request message is used to request use of the resource of the first network.

The device according to the embodiment of the present application can implement corresponding functions of various devices in the aforementioned communication method embodiments. The flows, functions, implementation modes and beneficial effects corresponding to various modules (sub-modules, units or components, etc.) in the device may be referred to the corresponding description in the above method embodiments, and will not be described again here. It is to be noted that the functions described with respect to various modules (sub-modules, units, components, or the like) in the devices of the embodiments of the present application may be implemented by different modules (sub-modules, units, components, or the like), or may be implemented by the same module (sub-module, unit, component, or the like).

It should also be understood that in various embodiments of the present application, the size of the sequence number of the above-described processes does not mean the order of execution, and the order of execution of various processes should be determined by their functions and internal logics, and should not constitute any limitation on the implementation of the embodiments of the present application.

Those skilled in the art will clearly appreciate that, for convenience and conciseness of description, the specific operating processes of the above-described systems, apparatuses and units may refer to the corresponding processes in the aforementioned method embodiments and will not be repeated herein.

The above is only the specific implementation of the present disclosure, but the scope of protection of the present disclosure is not limited thereto. Any person skilled in the art may easily think of changes or substitutions within the technical scope disclosed in the present application, which is to be covered within the protection scope of the present application. Therefore, the scope of protection of the present application shall be subject to the scope of protection of the claims.

## Claims

1. A communication method performed by a terminal, comprising:
sending an authentication request to a first network device in a first network, wherein the authentication request carries a first credential for verifying an authority of the terminal belonging to a second network to use a resource of the first network.

2. The method of claim 1, wherein the first credential carries at least one of: a first signature for verifying the authority of the terminal to use a resource of the first network authorized for the second network, or a second signature for verifying an authority of the second network to use a resource of the first network.

3. The method of claim 2, wherein the first credential further carries at least one of: a temporary identifier of the terminal, or a temporary public key of the terminal.

4. The method of claim 2 or 3, wherein the second signature is carried by a second credential contained in the first credential, and the second credential further carries at least one of: an identifier of a first core network device in the first network, a public key of the first core network device, an identifier of a second core network device in the second network, a public key of the second core network device, or information about the resource of the first network authorized for use by the second network.

5. The method of any one of claims 1 to 4, wherein the authentication request further carries a third signature for verifying validity of the authentication request, and the third signature is calculated based on a temporary private key of the terminal and at least one of the following: an identifier of the first network device, a first random number, or a first security parameter for calculating a communication key between the terminal and the first network device.

6. The method of any one of claims 1 to 5, wherein the authentication request further carries at least one of: an identifier of the first network device, a first random number, or a first security parameter for calculating a communication key between the terminal and the first network device.

7. The method of any one of claims 1 to 6, further comprising:
receiving an authentication response from the first network device, wherein the authentication response carries a certificate of the first network device, and the certificate of the first network device comprises a fourth signature for authentication of the first network device.

8. The method of claim 7, wherein the certificate of the first network device further comprises at least one of: an identifier of a first core network device in the first network, an identifier of the first network device, or a public key of the first network device.

9. The method of claim 8, further comprising:
authenticating the first network device based on the public key of the first core network device, the fourth signature, and at least one of the following: the identifier of the first network device or the public key of the first network device.

10. The method of any one of claims 7 to 9, wherein the authentication response further carries a fifth signature for verifying validity of the authentication response.

11. The method of claim 10, wherein the authentication response further carries at least one of: an identifier of the terminal, a second random number, or a second security parameter for calculating a communication key between the terminal and the first network device.

12. The method of claim 11, further comprising:
verifying the validity of the authentication response based on a public key of the first network device, the fifth signature, and at least one of the following: the temporary identifier of the terminal, the second random number, or the second security parameter.

13. The method of claim 11 or 12, further comprising:
calculating the communication key between the terminal and the first network device based on the second security parameter and the first security parameter.

14. The method of any one of claims 1 to 13, further comprising:
receiving a first resource authorization message from a second core network device in the second network, wherein the first resource authorization message carries the first credential.

15. The method of claim 14, further comprising:
sending a first resource request message to the second core network device, wherein the first resource request message is used to request use of the resource of the first network.

16. The method of claim 15, wherein the first resource request message carries at least one of: a temporary identifier of the terminal, or a temporary public key of the terminal.

17. The method of any one of claims 1 to 16, wherein the first network device comprises one of the following: an access network device, or a third network core network device.

18. A communication method performed by a first network device, comprising:
receiving an authentication request from a terminal, wherein the authentication request carries a first credential for verifying an authority of the terminal belonging to a second network to use a resource of a first network, and the first network device belongs to the first network.

19. The method of claim 18, wherein the first credential carries at least one of: a first signature for verifying the authority of the terminal to use a resource of the first network authorized for the second network, or a second signature for verifying an authority of the second network to use a resource of the first network.

20. The method of claim 19, wherein the first credential further carries at least one of: a temporary identifier of the terminal, or a temporary public key of the terminal.

21. The method of claim 20, wherein the second signature is carried by a second credential contained in the first credential, and the second credential further carries at least one of: an identifier of a first core network device in the first network, a public key of the first core network device, an identifier of a second core network device in the second network, a public key of the second core network device, or information about the resource of the first network authorized for use by the second network.

22. The method of claim 21, further comprising:
verifying the authority of the terminal to use the resource of the first network authorized for the second network based on the public key of the second core network device, the first signature, and at least one of the following: the temporary identifier of the terminal, the temporary public key of the terminal, or the second credential.

23. The method of claim 21, further comprising:
verifying the authority of the second network to use the resource of the first network based on the public key of the first core network device, the second signature and at least one of the following: the identifier of the first core network device, the public key of the first core network device, the identifier of the second core network device, the public key of the second core network device, or the information about the resource of the first network authorized for use by the second network.

24. The method of any one of claims 18 to 23, wherein the authentication request further carries a third signature for verifying validity of the authentication request.

25. The method of claim 24, wherein the authentication request further carries at least one of: an identifier of the first network device, a first random number, or a first security parameter for calculating a communication key between the terminal and the first network device.

26. The method of claim 25, further comprising:
verifying the validity of the authentication request based on a temporary public key of the terminal, the third signature, and at least one of the following: the identifier of the first network device, the first random number, or the first security parameter for calculating the communication key between the terminal and the first network device.

27. The method of any one of claims 18 to 26, further comprising:
sending an authentication response to the terminal, wherein the authentication response carries a certificate of the first network device, and the certificate of the first network device comprises a fourth signature for authentication of the first network device.

28. The method of claim 27, wherein the certificate of the first network device further comprises at least one of: an identifier of a first core network device in the first network, an identifier of the first network device, or a public key of the first network device.

29. The method of claim 27 or 28, wherein the authentication response further carries a fifth signature for verifying validity of the authentication response, and the fifth signature is calculated based on a private key of the first network device and at least one of the following: a temporary identifier of the terminal, a second random number, or a second security parameter for calculating a communication key between the terminal and the first network device.

30. The method of any one of claims 27 to 29, wherein the authentication response further carries at least one of: a temporary identifier of the terminal, a second random number, or a second security parameter for calculating a communication key between the terminal and the first network device.

31. The method of claim 25 or 26, further comprising:
calculating the communication key between the terminal and the first network device based on the first security parameter and the second security parameter.

32. The method of any one of claims 18 to 31, wherein the first network device comprises one of the following: an access network device, or a third network core network device.

33. A communication method performed by a second core network device, comprising:
sending a first resource authorization message to a terminal, wherein the first resource authorization message carries a first credential for verifying an authority of the terminal belonging to a second network to use a resource of a first network, and the second core network device belongs to the second network.

34. The method of claim 33, wherein the first credential carries at least one of: a first signature for verifying an authority of the terminal to use a resource of the first network authorized for the second network, or a second signature for verifying an authority of the second network to use a resource of the first network.

35. The method of claim 34, wherein the first credential further carries at least one of: a temporary identifier of the terminal, or a temporary public key of the terminal.

36. The method of claim 34 or 35, wherein the second signature is carried by a second credential contained in the first credential, and the second credential further carries at least one of: an identifier of the second core network device, a public key of the second core network device, an identifier of a first core network device, a public key of the first core network device, or information about a resource of a network where the first core network device is located that are authorized for use by the second network.

37. The method of claim 36, wherein the first signature is calculated based on a private key of the second core network device and at least one of: a temporary identifier of the terminal, a temporary public key of the terminal, or the second credential.

38. The method of any one of claims 33 to 37, further comprising:
receiving a first resource request message from the terminal, wherein the first resource request message is used to request use of the resource of the first network.

39. The method of claim 38, wherein the first resource request message carries at least one of: a temporary identifier of the terminal, or a temporary public key of the terminal.

40. The method of claim 36, further comprising:
sending a second resource request message to the first core network device, wherein the second resource request message is used to request use of the resource of the first network; and
downloading the second credential from the block chain.

41. A communication method performed by a first core network device, comprising:
uploading a second resource authorization message to a block chain, wherein the second resource authorization message carries a second credential, and the second credential carries a second signature for verifying an authority of a second network to use a resource of a first network, and the first core network device belongs to the first network.

42. The method of claim 41, wherein the second signature is calculated based on a private key of the first core network device and at least one of the following: an identifier of the first core network device, a public key of the first core network device, an identifier of a second core network device in the second network, a public key of the second core network device, or information about the resource of the first network authorized for use by the second network.

43. The method of claim 41 or 42, wherein the second credential further carries at least one of the following: an identifier of a second core network device, a public key of the second core network device, an identifier of the first core network device, a public key of the first core network device, or information about the resource of the first network authorized for use by the second network.

44. The method of any one of claims 41 to 43, further comprising:
receiving a second resource request message from a second core network device in the second network, wherein the second resource request message is used to request use of the resource of the first network.

45. A terminal, comprising:
a first communication unit, configured to send an authentication request to a first network device in a first network, wherein the authentication request carries a first credential for verifying an authority of the terminal belonging to a second network to use a resource of the first network.

46. A first network device, comprising:
a second communication unit, configured to receive an authentication request from a terminal, wherein the authentication request carries a first credential for verifying an authority of the terminal belonging to a second network to use a resource of a first network, and the first network device belongs to the first network.

47. A second core network device, comprising:
a third communication unit, configured to send a first resource authorization message to a terminal, where the first resource authorization message carries a first credential for verifying an authority of the terminal belonging to a second network to use a resource of a first network, and the second core network device belongs to the second network.

48. A first core network device, comprising:
a fourth communication unit, configured to upload a second resource authorization message to a block chain, wherein the second resource authorization message carries a second credential, and the second credential carries a second signature for verifying an authority of a second network to use a resource of a first network, and the first core network device belongs to the first network.
